# EUROPÄISCHE PATENTSCHRIFT

(11) **EP 1 118 513 B1**
(45) Veröffentlichungstag und Bekanntmachung des Hinweises auf die Patenterteilung: **22.06.2005**
(21) Anmeldenummer: 00127203.8
(22) Anmeldetag: 14.12.2000
(51) Int. Cl.: B60R 22/46

(54) **Sicherheitsgurtanordnung für einen Fahrzeuginsassen**
Safety belt arrangement for a vehicle occupant
Dispositif de ceinture de sécurité pour occupant de véhicule

(30) Priorität: 19.01.2000 DE 10001991
(43) Veröffentlichungstag der Anmeldung: 25.07.2001
(73) Patentinhaber: Volkswagen Aktiengesellschaft, 38436 Wolfsburg (DE)
(72) Erfinder: Schawe, Sven, 38120 Braunschweig (DE)

(56) Entgegenhaltungen:
- EP-A- 0 858 935
- WO-A-00/56581
- DE-A- 4 307 089
- DE-A- 4 428 921
- DE-C- 19 816 277
- DE-U- 29 717 477
- US-A- 4 050 717

## Beschreibung

Die Erfindung betrifft eine Sicherheitsgurtanordnung für einen Fahrzeuginsassen gemäß dem Oberbegriff des Patentanspruchs 1.

Unter einer Sicherheitsgurtanordnung, nämlich mit separatem Schulter- und Beckengurt, soll eine Anordnung verstanden sein, bei der die Längen von Schulter- und Beckengurt unabhängig voneinander sind. In der US-PS 3,891,274 ist dies dadurch erreicht, daß Schulter- und Beckengurt durch individuelle Gurtbänder gebildet sind, die an der Zunge eines Gurtschlosses zusammenstoßen und an dieser Gurtzunge durch individuelle Schlaufenbildung befestigt sind. Grundsätzlich können auch bei separatem Schulter- und Beckengurt diese beiden Gurte durch einen gemeinsamen Gurt gebildet sein, der dann aber an der Schloßzunge festgelegt ist, so daß beispielsweise eine Verkürzung eines der beiden Gurte nicht zu einer Längenänderung des anderen Gurtes führt.

Die DE 44 11 184 C2 offenbart eine Sicherheitsgurtanordnung, deren Becken- und Schultergurt in Abweichung von der Erfindung durch ein gemeinsames Gurtband gebildet sind, das eine Öse an der Schloßzunge Gleitbewegungen zulassend durchsetzt. Dabei handelt es sich also um eine Gurtanordnung, bei der jede Längenänderung eines der beiden Gurte auch eine Längenänderung des jeweils anderen Gurtes zur Folge hat. Bei diesem Stand der Technik ist der Anlenkung des Schultergurts ein erster Gurtstrammer zugeordnet, der bei einem drohenden Crash über einen Ultraschallsensor betätigt wird, während ein am Gurtschloß vorgesehener zweiter Gurtstrammer dann über einen weiteren Sensor aktiviert wird, wenn tatsächlich ein Crash eingetreten ist. Erfolgt während einer vorgegebenen Zeit nach Aktivierung des ersten Gurtstrammers kein Crash, wird seine Aktivierung zurückgenommen. Dadurch ist die Möglichkeit gegeben, die Strammkraft, mit der der Sitzgurt den Fahrzeuginsassen auf dem Sitz sichert, vor dem Auftreten eines Crashs so einzustellen, daß der Fahrer in seiner Reaktionsfähigkeit nicht behindert wird. Nachteilig ist dabei jedoch, daß bei jeder Crashart - sofern man nicht die Wirkung der Gurtstrammer auf nur eine Crashart, beispielsweise einen Frontalcrash, beschränkt - sowohl der Schulter- als auch der Beckengurt beeinflußt wird.

Das Sicherheitsgurtsystem nach der US-PS 5,076,608 sieht wiederum keine separaten Schulter- und Beckengurte im Sinne der Erfindung vor; vielmehr bilden sie einen gemeinsamen Gurt, der durch Gleitösen umgelenkt ist. Der Schultergurt ist mit seinem freien Ende zu einem Gurtretraktor am Fahrzeugaufbau geführt. Zusätzlich ist ein separater Schenkelgurt vorhanden, an dessen einem Ende ein individueller Retraktor vorgesehen ist, während sein anderes Ende beim Crash in Wirkverbindung mit der vorderen Stoßstange des Fahrzeugs trägt und bei Rückwärtsbewegung derselben im Sinne des Straffens des Schenkelgurts verlagert wird. Bei einem Crash erfolgt in jedem Falle ein Straffen von Schulter- und Beckengurt.

Auch bei dem System nach der DE 41 12 579 A1 finden sich keine separaten Schulter- und Beckengurte; diese sind vielmehr durch ein gemeinsames durchlaufendes Gurtband gebildet. Ein am freien Ende des Schulterbands vorgesehener Aufrollautomat ist mit einer Notsperre versehen, die in Abhängigkeit von Signalen eines Laserradars und eines Rechners betätigt wird. Dieser schätzt das Verhalten des Fahrzeuginsassen in Abhängigkeit von diesen betreffenden Daten, gesammelten Fahrzeugdaten und gespeicherten Fahrzeugdaten ab.

Zwei individuelle Gurtbänder mit separatem Schulter- und Beckengurt, denen jeweils eine Arretierungsvorrichtung zugeordnet ist, sind in der gattungsgemäßen DE 44 28 921 A1 offenbart. Zumindest eine Arretierungsvorrichtung kann über einen weiteren Sensor angesteuert werden, so dass bei einer Front- oder Heckkollision beide Arretierungsvorrichtungen ausgelöst werden und bei einer seitlichen Kollision nur die Arretierungsvorrichtung für den Beckengurt ausgelöst wird.

Wie der Stand der Technik erkennen läßt, ist man also bestrebt, nicht schlechthin beim Auftreten eines Crashs eine einheitliche Aktivierung von Gurtstraffern vorzunehmen, sondern dabei eine Anpassung auch an das mögliche Verhalten des Fahrzeuginsassen zu treffen.

Der Erfindung liegt die Aufgabe zugrunde, eine Sicherheitsgurtanordnung mit Schulter- und Beckengurt zu schaffen, die einerseits bei unterschiedlichen Crasharten einen Schutz des Fahrzeuginsassen gewährleistet, andererseits aber ihm - soweit möglich - die Chance gibt, bei unterschiedlichen Crasharten Ausweichbewegungen vorzunehmen.

Die erfindungsgemäße Lösung dieser Aufgabe besteht in einer Sicherheitsgurtanordnung mit den Merkmalen des Patentanspruchs 1; vorteilhafte Ausbildungen der Erfindung beschreiben die Unteransprüche.

Ein erstes wesentliches Merkmal der Erfindung besteht also in der Verwendung separater Schulter- und Beckengurte in dem eingangs definierten Sinne. Dieses Merkmal für sich ist zwar, wie eingangs dargelegt, bekannt, jedoch nicht in Kombination mit den beiden Gurten individuell zugeordneten Gurtstraffern und diesen zugeordneten crashartsensitiven Crashsensoren, die ein individuelles Ansteuern der Gurtstraffer ermöglichen, um bei unterschiedlichen Crasharten Ausweichbewegungen zuzulassen. So kann es zweckmäßig sein, bei einem Seitencrash das Becken seitlich zu verlagern oder bei einem Rollover mit dem Oberkörper Verformungen des Fahrzeugdachs auszuweichen.

An dieser Stelle sei eingefügt, daß unter einem Gurtstraffer im Sinne der Erfindung sowohl eine Einrichtung zur Arretierung der Gurtlänge als auch eine Rückzugvorrichtung zu verstehen ist, die bei Sensierung eines Crashs oder eines unmittelbar bevorstehenden Crashs aktiviert wird.

Die erfindungsgemäße Merkmalskombination bietet also die Möglichkeit, beispielsweise bei einem Seitencrash nur den Gurtstraffer des Schultergurts zu aktivieren, so daß der Fahrzeuginsasse im Bereich seines Beckens durch den Beckengurt nicht so "festgezurrt" wird, daß er mit dem Becken keine seitlichen Ausweichbewegungen machen kann. Bei einem Rollover wird zweckmäßigerweise nur der Gurtstraffer des Beckengurts aktiviert, so daß der Fahrzeuginsasse zwar am Sitz festgehalten wird und dadurch die Wahrscheinlichkeit des Anschlagens seines Kopfes an das Dach zumindest stark verringert wird, aber der Insasse mit seinem Oberkörper Dachverformungen ausweichen kann. Bekanntlich besteht beim Rollover stets die Gefahr, daß das Fahrzeugdach eingedrückt wird.

Eine andere Ausführungsform der Erfindung sieht statt des völligen Verzichts auf die Aktivierung ders Gurtstraffers des jeweils anderen Gurtes eine Verzögerung der Aktivierung dieser Gurtstraffer vor, so daß dem Fahrzeuginsassen zwar nach Auftreten eines Crashs oder nach Sensierung eines bevorstehenden Crashs für eine relativ kurze Zeit die Möglichkeit zur eigenen Reaktion gegeben wird, danach aber Schulter- und Beckenbereich des Fahrzeuginsassen durch Aktivierung von Schulter- und Beckengurt arretiert werden.

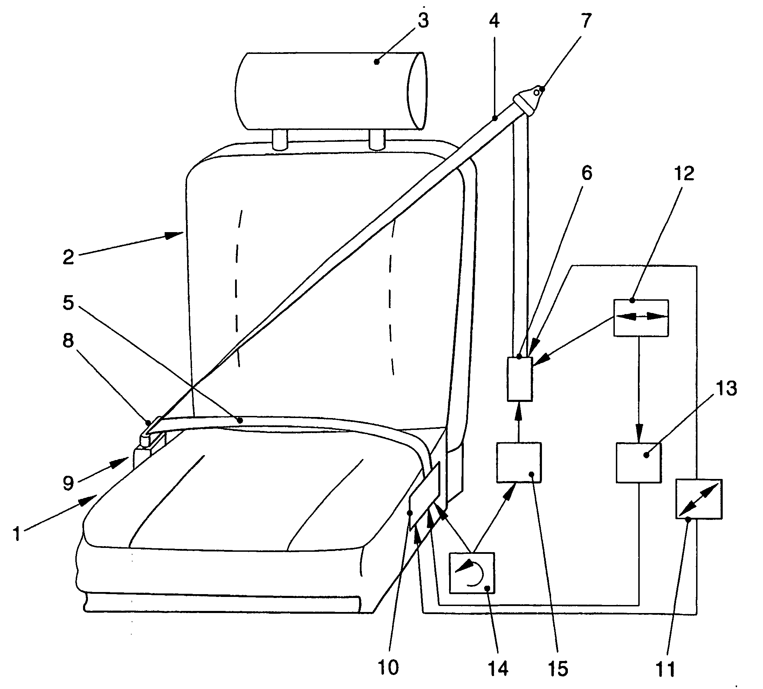

Ein Ausführungsbeispiel der Erfindung wird im folgenden anhand der Zeichnung erläutert, die perspektivisch einen mit der erfindungsgemäßen Sicherheitsgurtanordnung ausgerüsteten Sitz eines Kraftfahrzeugs wiedergibt.

Der Sitz enthält in üblicher Weise den eigentlichen Sitz 1 und die Rückenlehne 2, an deren oberen Ende in üblicher Weise eine Kopf- oder Nackenstütze 3 angeordnet ist. Diese Einzelheiten interessieren im Rahmen der Erfindung nicht, da diese in vorteilhafter Weise unabhängig von der speziellen Sitzkonstruktion einsetzbar ist.

Die erfindungsgemäße Sicherheitsgurtanordnung enthält den Schultergurt 4 und den Beckengurt 5; der Schultergurt 4 geht von dem ihm zugeordneten Gurtstraffer 6 aus und wird durch die ösenartige Umlenkung 7 beispielsweise an der B-Säule des Fahrzeugs in Richtung schräg nach unten zur Gurtzunge 8 des Gurtschlosses 9 geführt. Das Gurtschloß 9 wird am eigentlichen Sitz 1 befestigt sein; es gibt auch Konstruktionen, bei denen das Gurtschloß 9 am Fahrzeugboden gehalten ist.

Der von dem Schultergurt 4 getrennte Beckengurt 5 ist mit seinem in der Figur linken Ende ebenfalls an der Gurt- oder Schloßzunge 8 befestigt und quer über den eigentlichen Sitz 1 zu dem Gurtstrammer 10 geführt, der an der anderen Seitenwange des eigentlichen Sitzes 1 angeordnet ist. Die separate Ausführung von Schulter- und Beckengurt 4 bzw. 5 hat zur Folge, daß die Betätigung des Gurtstraffers 6 keine Auswirkung auf den Beckengurt 5 und die Betätigung des Gurtstraffers 10 keine Auswirkung auf den Schultergurt 4 hat. Dies ist wichtig für die Lösung der der Erfindung zugrunde liegenden Aufgabe.

Betrachtet man weiter die Zeichnung, so erkennt man bei 11 einen Crashsensor, der beim Auftreten eines in Längsrichtung des Fahrzeugs erfolgenden Crashs Betätigungssignale an beide Gurtstraffer 6 und 10 liefert, so daß der Fahrzeuginsasse mit Becken und Oberkörper durch die Gurte 4 und 5 fest gegen den Sitz 1, 2 gedrückt bzw. gezogen wird. Erfolgt dagegen ein Seitencrash, so wird der Seitencrashsensor 12 tätig und liefert Aktivierungssignale an den Gurtstraffer 6 des Schultergurts 4. Der Fahrzeuginsasse hat also die Möglichkeit, beim Seitencrash sein Becken seitlich zu verlagern. Allerdings ist diese Möglichkeit nur während einer relativ kurzen Zeitspanne nach Sensierung des Crashs gegeben, da die Signale des Seitencrashsensors 12 über das Zeitglied 13 verzögert auch zum Gurtstraffer 10 des Beckengurts 5 gelangen, so daß auch dieser Gurtstraffer dann aktiviert wird.

Beim Auftreten eines Rollovers wird der Rollover-Sensor 14 wirksam und aktiviert den Gurtstraffer 10 des Beckengurts 5, so daß der Oberkörper einschließlich Kopf des Fahrzeuginsassen für Bewegungen in einem gewissen Bereich frei bleibt. Auch hier ist jedoch eine Signalübertragung zu den Gurtstraffern des anderen Gurts, hier also dem Gurtstraffer 6 des Schultergurts 4, über ein Zeitglied 15 vorgesehen, so daß nach Ablauf einer vorgegebenen Zeitspanne auch beim Rollover der Fahrzeuginsasse durch beide Gurte 4 und 5 zurückgehalten wird.

Mit der Erfindung ist demgemäß eine Sicherheitsanordnung geschaffen, die die gestellte Aufgabe mit einfachen, für sich bekannten und bewährten Mitteln löst.

## Patentansprüche

1. Sicherheitsgurtanordnung für einen Fahrzeuginsassen mit separatem Schulter- (4) und Beckengurt (5), denen beiden zumindest ein individueller Gurtstraffer und diesen crashartsensitive Crashsensoren (11, 12, 14) zur für die jeweilige Crashart sicherheitsoptimalen Betätigung der Gurtstraffer zugeordnet sind, wobei die Crashsensoren (11, 12, 14) einen Längscrashsensor (11) und zumindest einen weiteren Crashsensor (12; 14) umfassen, **dadurch gekennzeichnet, dass** der weitere Crashsensor ein Rolloversensor (14) ist, womit der Gurtstraffer (10) des Beckengurtes (5) aktivierbar ist, und/oder der weitere Crashsensor ein Seitanerashsensor (12) ist, womit der Gurtstraffer (6) des Schultergurtes (4) aktivierbar ist, wobei der dem jeweils anderen Gurt zugeordnete Gurtstraffer nicht oder verzögert aktivierbar ist.

2. Anordnung nach Anspruch 1, **dadurch gekennzeichnet, dass** Gurtstraffern (6, 10) für beide Gurte (4, 5) zumindest ein Längscrashsensor (11) zugeordnet ist.

## Claims

1. Safety belt arrangement for a vehicle occupant, with a separate shoulder belt (4) and lap belt (5) which are both assigned at least one individual belt tightener and the latter is assigned crash sensors (11, 12, 14) which are sensitive to the type of crash and are intended for actuating the belt tighteners in an optimum manner in terms of safety for the particular type of crash, the crash sensors (11, 12, 14) comprising a longitudinal crash sensor (11) and at least one further crash sensor (12; 14), **characterized in that** the further crash sensor is a rollover sensor (14) with which the belt tightener (10) of the lap belt (5) can be activated, and/or the further crash sensor is a side crash sensor (12) with which the belt tightener (6) of the shoulder belt (4) can be activated, in which case the belt tightener which is assigned to the other belt in each case is not activatable or is activatable with a delay.

2. Arrangement according to Claim 1, **characterized in that** belt tighteners (6, 10) for the two belts (4, 5) are assigned at least one longitudinal crash sensor (11) .

## Revendications

1. Dispositif de ceinture de sécurité pour un occupant d'un véhicule, comprenant une ceinture diagonale (4) et une ceinture abdominale (5) séparées, auxquelles est associé respectivement au moins un rétracteur de ceinture individuel et à ceux-ci des détecteurs de collision sensibles au type de collision (11, 12, 14) pour l'actionnement des rétracteurs de manière optimale du point de vue de la sécurité pour chaque type de collision, les détecteurs de collision (11, 12, 14) comprenant un détecteur de collision longitudinale (11) et au moins un détecteur de collision supplémentaire (12 ; 14), **caractérisé en ce que** le détecteur de collision supplémentaire est un détecteur de tonneau (14), au moyen duquel le rétracteur de ceinture (10) de la ceinture abdominale (5) peut être activé, et/ou le détecteur de collision supplémentaire est un détecteur de collision latérale (12), au moyen duquel le rétracteur de ceinture (6) de la ceinture diagonale (4) peut être activé, le rétracteur de ceinture associé à l'autre ceinture respective ne pouvant pas être activé ou pouvant être activé de manière retardée.

2. Dispositif selon la revendication 1, **caractérisé en ce que** l'on associe aux rétracteurs de ceinture (6, 10) pour les deux ceintures (4, 5) au moins un détecteur de collision longitudinale (11).
